# EUROPÄISCHE PATENTSCHRIFT

(11) **EP 2 649 604 B1**
(45) Veröffentlichungstag und Bekanntmachung des Hinweises auf die Patenterteilung: **14.06.2017**
(21) Anmeldenummer: 11815681.9
(22) Anmeldetag: 05.12.2011
(51) Int. Cl.: G09B 9/08, A62B 1/02, E06C 1/52, A63G 31/16

(54) **AUTONOMES SICHERHEITSSYSTEM FÜR DIE BENUTZER VON FAHRZEUGSIMULATOREN**
AUTONOMOUS SAFETY SYSTEM FOR THE USERS OF VEHICLE SIMULATORS
SYSTÈME DE SÉCURITÉ AUTONOME POUR LES UTILISATEURS DE SIMULATEURS DE CONDUITE

(30) Priorität: 08.12.2010 DE 102010053686
(43) Veröffentlichungstag der Anmeldung: 16.10.2013
(73) Patentinhaber: Grenzebach Maschinenbau GmbH, 86663 Asbach-Bäumenheim (DE)
(72) Erfinder: GUEHRING, Olaf, 82547 Eurasburg (DE); SCHMIDT, Holger, 85354 Freising (DE)
(74) Vertreter: Kindermann, Peter
(86) Internationale Anmeldenummer: PCT/DE2011/002081
(87) Internationale Veröffentlichungsnummer: WO 2012/076002

(56) Entgegenhaltungen:
- EP-A2- 0 324 567
- US-A- 5 584 697
- US-A- 5 857 917
- US-A1- 2009 008 186

## Beschreibung

Die Erfindung betrifft eine Vorrichtung und ein Verfahren zum Betrieb eines Sicherheitssystems für die Benutzer von Fahrzeugsimulatoren.

Um den Lernprozess zum Erlernen der Benutzung unterschiedlicher Fahrzeuge zu verkürzen und, sowohl in der Anfangsphase eines solchen Prozesses als auch zum Training, in der Praxis Gefahren zu minimieren werden neuerdings verstärkt entsprechende Simulatoren eingesetzt.

In der DE 10 2008 023 955 B4 ist hierzu zum Beispiel ein Verfahren zur Simulation von Ereignissen und Abläufen von Luft-, Land- oder Wasserfahrzeugen und ein entsprechendes Simulationssystem beschrieben. Mit dieser Erfindung soll eine Simulationseinrichtung in Echtzeit angesteuert werden, obwohl die zur Ansteuerung erforderlichen Daten lediglich von einem Nichtechtzeit -Simulationsprogramm bereitgestellt werden, wobei eine durch einen Datenmanager verursachte Latenzzeit kompensiert werden soll.

Als Echtzeit wird hierbei diejenige Zeit verstanden, die Abläufe in der realen Welt tatsächlich benötigen. Der Begriff Echtzeit meint nicht eine bestimmte Geschwindigkeit oder Verarbeitungsleistung des Programms oder der Steuerung, sondern legt nur den Zeitrahmen fest innerhalb dem das System reagieren muss. Der Begriff Latenzzeit bedeutet einen Zeitraum zwischen einer Aktion und dem Eintreten der zu erwartenden Reaktion, also eine Verzögerungszeit.

In dieser Patentschrift wird im Wesentlichen unter Schutz gestellt, dass im Falle des nicht rechtzeitigen Eintreffens von Daten die entstehende Datenlücke durch Daten aus Erfahrungswerten oder Daten aus vorangegangenen Simulationsprogrammen ersetzt wird, und diese Daten dann an die Bewegungssteuerung der Echtzeit -Simulationseinrichtung gesendet werden. Hinweise zum Betrieb eines Sicherheitssystems für die Benutzer eines Fahrzeugsimulators sind hier nicht zu finden.

Weiter ist aus der DE 600 20466 T2 ein so genannten Parallelroboter mit vier Freiheitsgraden bekannt, der die Aufgabe löst, eine bewegliche Platte mit vier Freiheitsgraden mit hoher Geschwindigkeit und einer hohen Beschleunigung zu verschieben, und die bewegliche Platte mit hoher Steifigkeit und Genauigkeit zu positionieren. Als Parallelroboter wird hierbei ein Roboter bezeichnet, bei dem eine Vielzahl von Aktuatoren parallel angeordnet sind, wobei ein solcher Roboter zum Beispiel bei einem Fahrsimulator für ein Motorfahrzeug anwendbar ist.

Zum Stand der Technik sind in dieser Druckschrift Parallelroboter mit sechs Freiheitsgraden genannt, die zum Beispiel in Flugsimulatoren, wie sie aus der US 5 333 514 und der US 5715 729 offenbart sind, verwendet werden.

In der DE 600 20 466 T2 wird ein Parallelroboter beschrieben, der im Wesentlichen aus einer speziellen Anordnung aus einem Parallelgestänge, einer sich bewegenden Plattform, Kopplungsteilen und kinematischen Elementen besteht. Mit Sicherheitssystemen für die Benutzer von Fahrzeugsimulatoren beschäftigt sich diese Druckschrift nicht.

Aus der US 5 584 697 A1 ist ein Simulator-System mit einer anhängenden Plattform für Passagiere bekannt.

In der US 2009/0008186 A1 ist ein Evakuierungs- und Rettungssystem für erhöhte Strukturen beschrieben.

Aus der EP 0 324 567 A2 ist ein Zugangssystem für ein Vergnügungs-Fahrgeschäft bekannt, wobei eine Vielzahl von Zugangspfaden mit jeweilige Eingangs- und Ausgangstüren Zugang zu einer beweglichen Plattform ermöglichen.

In der US 5 857 917 A ist ein 3-D Simulator beschrieben, wobei auf einer Projektionsfläche ein dreidimensionales Bild projiziert wird.

Der erfindungsgemäßen Vorrichtung, bzw. dem entsprechenden Verfahren, liegt deshalb die Aufgabe zugrunde, eine Vorrichtung und ein Verfahren vorzustellen, mit denen, neben der Vermittlung betriebstechnischer Kenntnisse von Fahrzeugen, auch die Sicherheit des Benutzers eines Fahrzeugsimulators bei einer technischen Störung oder einem Unfall im Vordergrund steht.

Die Aufgabe wird mit einer Vorrichtung nach Anspruch 1 bzw. einem Verfahren nach Anspruch 5 gelöst.

Weitere Ausgestaltungen ergeben sich aus den Unteransprüchen.

Die erfindungsgemäße Vorrichtung wird im Folgenden näher beschrieben. Es zeigen dabei im Einzelnen:
- Fig. 1:: eine perspektivische Darstellung eines Fahrzeugsimulators,
- Fig. 2:: eine Draufsicht auf eine erfindungsgemäße Vorrichtung,
- Fig. 3:: eine Vorderansicht eines erfindungsgemäßen Sicherheitssystems,
- Fig. 4:: eine Seitenansicht eines erfindungsgemäßen Sicherheitssystems,
- Fig. 5:: eine Draufsicht auf die Bodenstruktur eines erfindungsgemäßen Sicherheitssystems, und
- Fig. 6:: eine besondere Bauform für eine schwergewichtige Fahrzeugkanzel

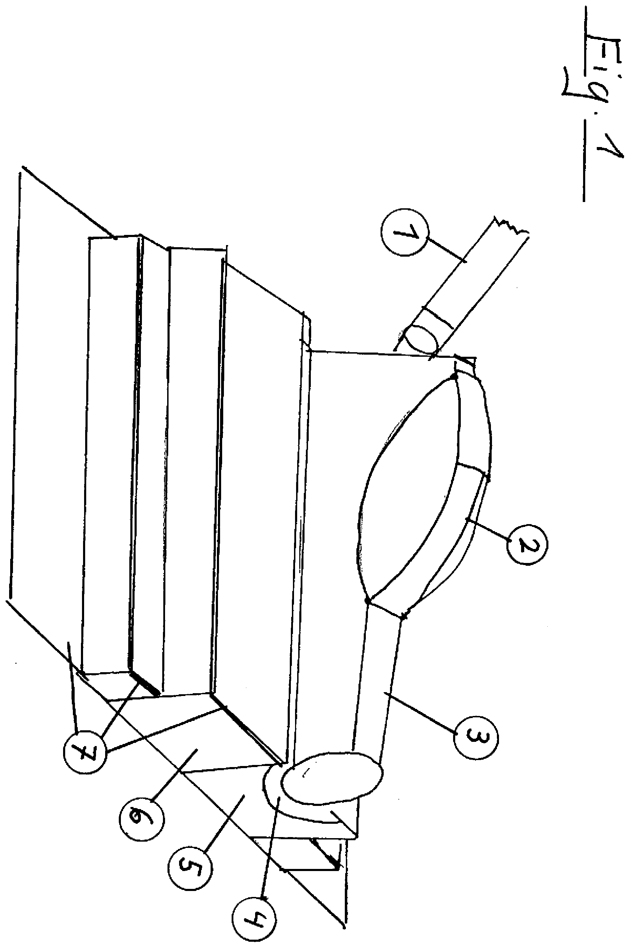

In der Fig.1 ist eine perspektivische Darstellung eines Fahrzeugsimulators in seiner Ruheposition dargestellt. Eine Fahrzeugkanzel 3 mit einem Kanzeloberteil 2, das zum Einstieg geöffnet werden kann, wird mittels eines angeflanschten Roboterarms 1 entsprechend den Anweisungen eines Fahrzeugschülers und den festgelegten Reaktionen eines Simulationsprogramms in der gewünschten Weise in drei Dimensionen bewegt. Die Kanzel 3 ist in der Ruheposition auf einem, entsprechend der Kontur der Unterseite der Kanzel geformten, Dämpfungsbelag 4 als Oberteil der Einstiegsvorrichtung 5 gelagert. In die Höhe des Einstiegsbereichs der Kanzel 3 führt zu beiden Seiten jeweils eine Einstiegstreppe 6, die für einen bequemen Einstieg auf der obersten Trittstufe breiter ausgeführt ist. Alle gezeigten Trittflächen sind beiderseits mit einem Sensorbelag 7 ausgestattet, der der Steuerung der Gesamtanlage den Zugang zu dem Fahrzeugsimulator meldet, sobald eine Person die Einstiegsvorrichtung 5 betritt.

In einer besonderen Ausgestaltung sind in einer oder mehreren Trittstufen besondere, hier nicht extra gezeigte, Sensoren vorgesehen, die das Gewicht, bzw. die Masse, der jeweiligen, den Fahrzeugsimulator betretenden, Personen messen. Auf diese Weise erhält die Steuerung der Gesamtanlage zusätzliche Informationen zur Abschätzung der von dem Roboter aufzubringenden Kraft für die Beschleunigung und Bewegung der Kanzel 3. Dadurch erhöht sich die Betriebssicherheit des Fahrzeugsimulators, da die durch das Simulationsprogramm provozierten Belastungsspitzen für Mensch und Maschine realistisch eingeschätzt werden können.

Weiterhin ist es für das Steuerungsprogramm wichtig mittels mehrerer Sensoren auf jedem Sitz und an jedem Anschnallgurt in der Kanzel 3 darüber unterrichtet zu werden, ob der Sitz besetzt ist und der entsprechende Benutzer auch angeschnallt ist. Auch der Einstiegsvorgang und das ordnungsgemäße Schließen der Kanzel müssen über Sensoren überwacht werden.

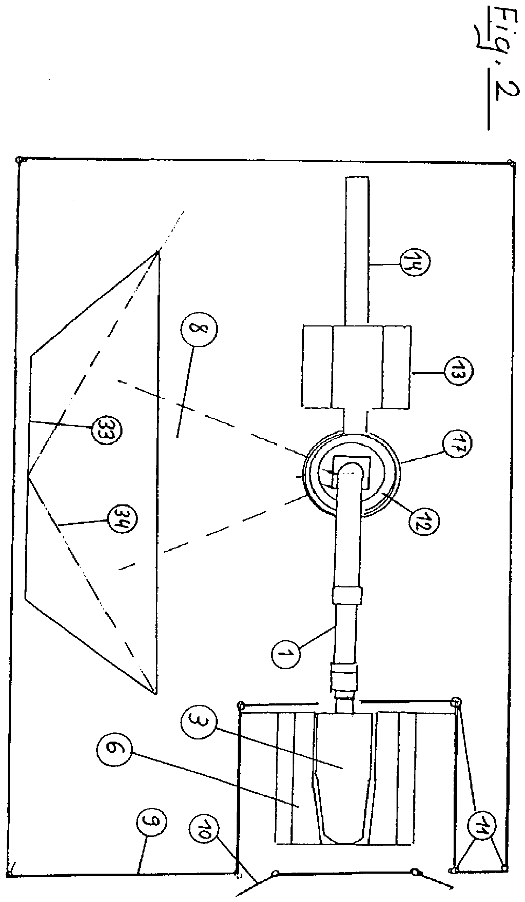

Die Fig. 2 zeigt eine Draufsicht auf eine erfindungsgemäße Vorrichtung.
Der Arbeitsbereich des Fahrzeugsimulators ist in der Art des gestrichelt gezeichneten Winkelbereichs 8 dargestellt. Hier sind in der Draufsicht der Roboterarm 1 und seine Verbindung mit der Fahrzeugkanzel 3 im Bereich der Einstiegstreppe 6 zu erkennen. Der Sockel des verwendeten Roboters ist in der Fig. 2 mit 12 bezeichnet.

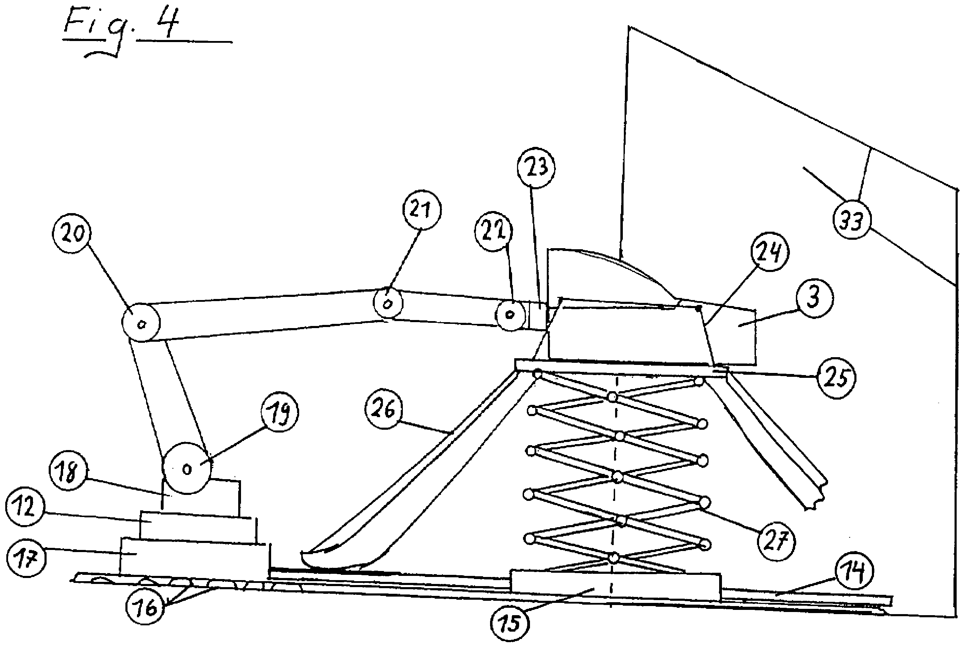

Konzentrisch um den Sockel 12 ist der Drehkranz 17 mit der Laufschiene 14 der Rettungseinheit 13 in der Stellung der Verlängerung des Roboterarms 1 zu sehen. Eine seitliche Ansicht zum Einsatz der Rettungseinheit 13 ist der Fig.4 zu entnehmen.

Um den gesamten Zutrittsbereich und Arbeitsbereich ist in dieser Figur die Sicherheitsabgrenzung 9 gezeigt, die lediglich von zwei Eingangstüren 10 unterbrochen ist. An allen Ecken der Sicherheitsabgrenzung 9 sind Überwachungssensoren 11 installiert. Diese Überwachungssensoren 11 können als optische Sensoren ausgestaltet sein, die, im Zusammenspiel mit jeweils einer Leuchteinheit, für jede zu überwachende Strecke die Funktion einer Lichtschranke haben. Der Bereich der verwendeten Wellenlänge des Lichts kann hierbei von sichtbarem Licht bis zu infrarotem Licht reichen.

Im unteren Bereich der Fig. 2 sind beispielhaft eine Projektionsfläche A mit der Bezeichnung 33 und eine Projektionsfläche B mit der Bezeichnung 34 im Querschnitt von oben dargestellt. Die Projektionsfläche 34 stellt hierbei den einfachsten Fall einer einfach geknickten Projektionswand dar. Die Projektionsfläche 33 ist in der Art einer zweifach geknickten Projektionswand ausgeführt. In beiden Fällen ist die Deckfläche, die ebenfalls als Projektionsfläche dient, in einer solchen Darstellung nicht zu erkennen. Prinzipielle Anmerkungen zu dem verwendeten Projektionsverfahren sind am Ende der Beschreibung zu finden.

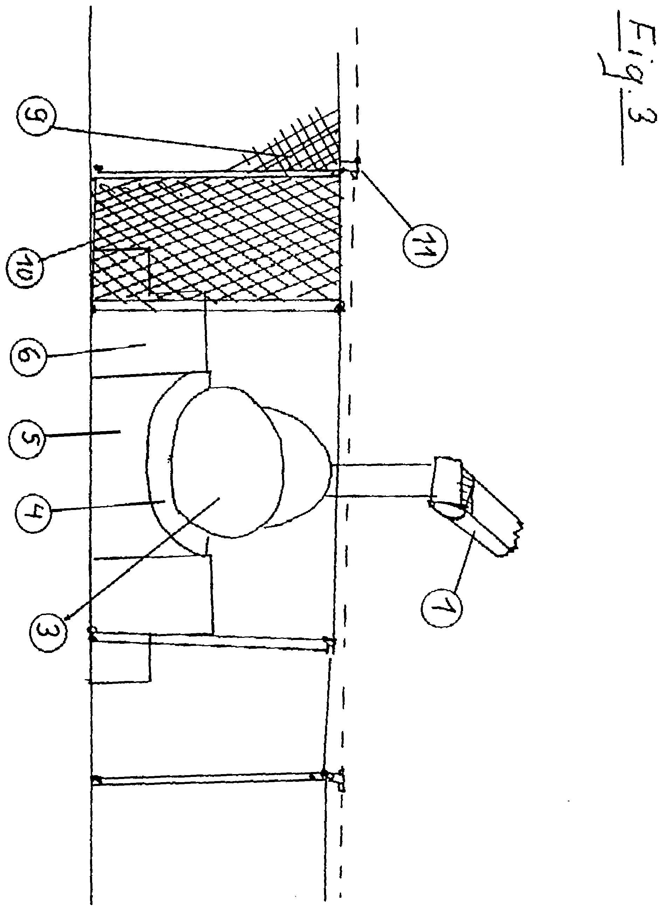

In der Fig. 3 ist die Vorderansicht eines erfindungsgemäßen Sicherheitssystems gezeigt.
Neben dem skizzierten Roboterarm 1, der Fahrzeugkanzel 3, dem Dämpfungsbelag 4, der Einstiegsvorrichtung 5 und der Einstiegstreppe 6 in der Vorderansicht, sind in dieser Sicht die linke Eingangstür 10 und ein Teil der Sicherheitsabgrenzung 9 besonders gekennzeichnet. Zudem ist einer der an jedem Eckpunkt angebrachten Überwachungssensoren 11 besonders dargestellt.

In der Fig. 4 ist eine Seitenansicht eines erfindungsgemäßen Sicherheitssystems dargestellt.
Neben dem Sockel 12 des Roboters und dem Drehkranz 18 des Roboterarms 1 sind hier in der Folge das Drehgelenk 1 mit der Bezeichnung 19, das Drehgelenk 2 mit der Bezeichnung 20, das Drehgelenk 3 mit der Bezeichnung 21, das Drehgelenk 4 mit der Bezeichnung 22 und das Drehgelenk 5 mit der Bezeichnung 23 und seiner direkten Befestigung der Kanzel 3 zu erkennen. Konzentrisch zu dem Drehkranz 18 des Roboterarms ist weiter der Drehkranz 17 der Rettungseinheit 13, die in der Fig. 2 von oben gezeigt wurde, installiert.

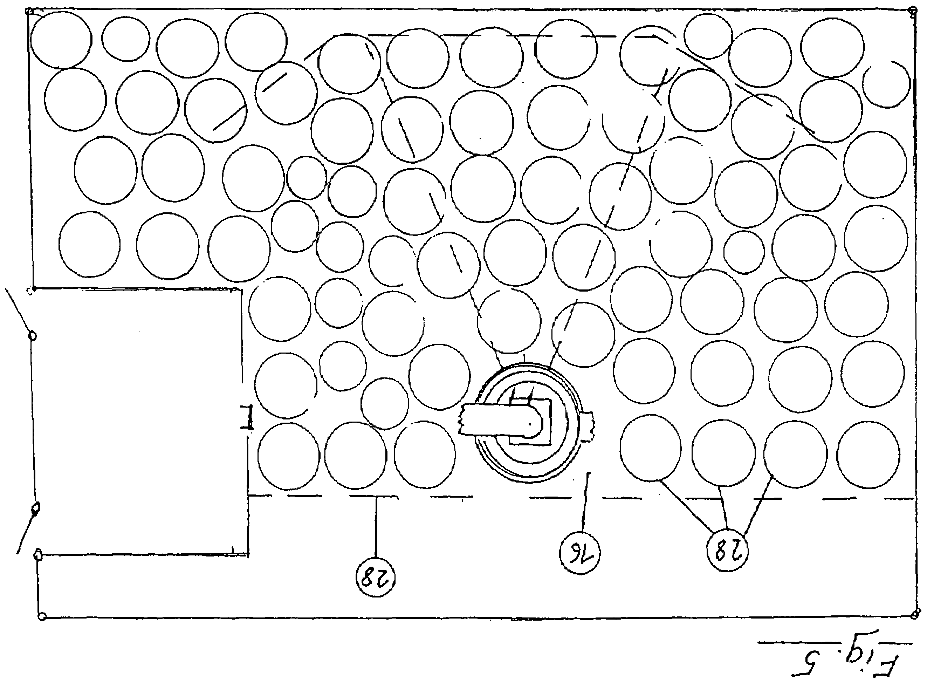

Die Rettungseinheit 13 basiert auf einer Lafette 15, die sich entlang einer Laufschiene 14 zu ihrem Einsatzort bewegen lässt. Der hierzu notwendige Antrieb ist an dieser Stelle aus Gründen der Übersicht weggelassen. Dasselbe gilt für den Drehkranz 17 der Rettungseinheit 13. Die Rettungseinheit 13 besteht weiterhin aus einer Hubeinheit 27 zum Anheben einer Rettungsplattform 25, die ringsum durch eine Reling 24 abgesichert ist. Der Abstieg von der Rettungsplattform 25 kann durch Absenkung der Hubeinheit 27 oder, in dringenden Fällen, mittels der Rettungsrutschen 26 erfolgen. In dieser Figur 4. ist im Boden mit der Bezeichnung 16 die Ausbildung von Bereichen mit einer als "Air-bag-Ausstattung" bezeichneten Funktion zu sehen. Diese wird in der Fig. 5 näher erläutert.

Im rechten Bereich der Fig.4 ist die Projektionsfläche 33 von der Seite dargestellt. Prinzipielle Anmerkungen zu dem verwendeten Projektionsverfahren sind am Ende der Beschreibung zu finden.

In der Fig.5 ist eine Draufsicht auf die Bodenstruktur 16 eines erfindungsgemäßen Sicherheitssystems zu sehen. Die dort gezeigten kreisförmigen Flächen stellen beispielhaft eigene Sicherungsbereiche 28 dar, innerhalb derer sich bei der Gefahr eines Aufpralls von Mensch oder Maschine aus jeder dieser Flächen ein Prallsack aufblähen kann um, wie bei dem Air-bag eines Autos, einen entsprechenden Aufprall von oben abzudämpfen. Als Auslöser für derartige Vorfälle dient jeweils ein, nicht dargestellter, Sensor, der jeder der benötigten runden Teilflächen zugeordnet ist und eine rasche Annäherung von fallenden Massen detektiert. Die benötigte Abdeckung richtet sich nach der Fläche des Prallsacks im aufgeblasenen Stadium und dem zu erwartenden und/oder technisch möglichen Operationsbereich des Roboterarms 1 in Zusammenwirkung mit der Kanzel 3.

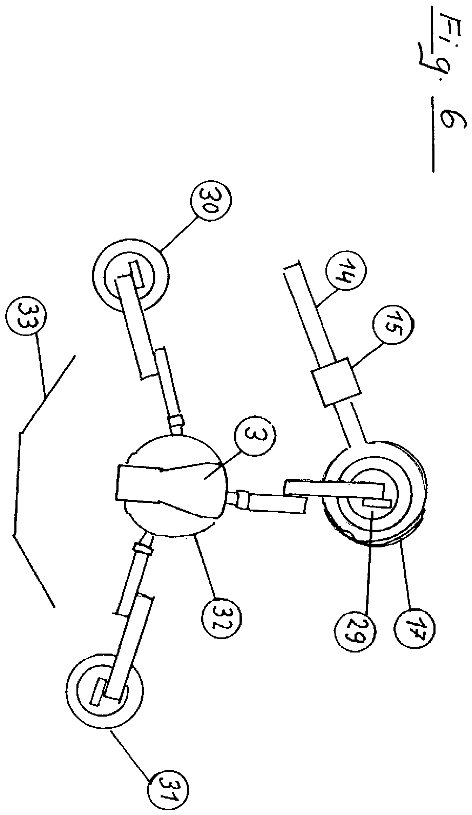

Fig.6 zeigt eine erfindungsgemäße besondere Bauform für eine schwergewichtige Fahrzeugkanzel 3. Bei dieser Bauform ist der Roboterarm 1 ersetzt durch die Roboterarme einer Gesamtheit von drei Robotern. Auf diese Weise verteilt sich die Last der Fahrzeugkanzel auf die drei Roboter 29, 30 und 31, die gemeinsam über die
Plattform 32 die Fahrzeugkanzel 3 tragen. Der Drehkranz 17 der Rettungseinheit 13 mit einer, in der Länge angepassten, Laufschiene 14 und der Lafette 15 ist hier dem Roboter 29 zugeordnet. Anstelle einer Zusammenarbeit von drei Robotern kann in manchen Fällen auch das Zusammenschalten von zwei Robotern genügen.

Als eine besondere Ausgestaltung der Sicherstellung des Schutzes vor einer Schädigung von Maschinenteilen, die zum unvorhersehbaren Ausfall eines Roboters und damit zu einer Gefahrensituation von Benutzern des erfindungsgemäßen Fahrzeugsimulators führen könnten, kann die akustische Erfassung und Auswertung charakteristischer Maschinen - Geräusche dienen. Das Spektrum der beim Betrieb von Industrierobotern entstehenden normalen Geräusche wird von akustischen Sensoren aufgezeichnet und als Referenz verwendet. Es kommen hier sowohl die Luftschallsignale als auch die Körperschallsignale infrage. Treten bei dem Betrieb eines solchen Roboters Geräusche auf, die außerhalb der Bandbreite des normalen Frequenzbandes und / oder des Geräuschpegels liegen, wird das von einer elektronischen Analyseschaltung erkannt und der Steuerung der Gesamtanlage gemeldet. Je nach dem Ausmaß des Abliegens der so erkannten Abweichung kann es notwendig sein, die gesamte Anlage zum nächsten vertretbaren Zeitpunkt abzuschalten oder bei der nächsten Wartung entsprechende Zusatzuntersuchungen vorzunehmen.
Als weitere Ausgestaltung kann vorgesehen sein bei Antrieben über bandähnliche Transmissionselemente, bei denen sich vorzeitige Ausfälle akustisch nur sehr schwer erfassen lassen, optische Sensoren einzusetzen. Mit solchen Sensoren lassen sich ungewöhnliches Flattern oder unzulässige Schwingungen von Bauteilen detektieren und registrieren. Bei dem Auftreten ungewöhnlicher Messwerte sind dieselben Maßnahmen wie bei akustisch detektierten Fehlern zu ergreifen.
Auch Schäden an elektrischen Teilen eines Fahrzeugsimulators können zu unerwünschten und vor allem unvorhersehbaren Ausfällen der gesamten Anlage führen. Da sich solche Schäden oftmals in der Entwicklung von Rauch offenbaren sind als besondere Ausgestaltung in den diesbezüglichen Anlageteilen Sensoren zur Detektion auffallender Rauchentwicklung vorgesehen. Gegen den Ausfall der elektrischen Stromversorgung sind zudem Notstrom - Aggregate und / oder Puffer - Akkumulatoren vorgesehen. Im Folgenden wird ein typischer Betriebsablauf in 19 Schritten dargestellt:

### Verfahrensschritte bei dem Betrieb des erfindungsgemäßen Simulators unter der Berücksichtigung von Sicherheitsampeln für Benutzer

### 1. Standby

Sensoren Arbeitsbereich (Ein),
Sensoren Einstiegsbereich (Ein)
Sensoren Eingangstore (Ein)
Sensoren Haube (Ein)
Sensoren Sitz (Ein)
Ampel (Rot)

### 2. Personen ID

Sensoren Arbeitsbereich (Ein),
Sensoren Einstiegsbereich (Ein)
Sensoren Eingangstore (Ein)
Sensoren Haube (Ein)
Sensoren Sitz (Ein)
Ampel (Rot)

### 3. Parken betriebsbereit

Sensoren Eingangstore (Aus)
Sensoren Einstiegsbereich (Aus)
Sensoren Arbeitsbereich (Ein)
Sensoren Haube (Ein)
Sensoren Sitz (Ein)
Ampel(grün)

### 4. Zugang Einstieg,Torentriegelung,Tor schließen

Sensoren Eingangstore (Aus)
Sensoren Einstiegsbereich (Aus)
Sensoren Arbeitsbereich (Ein)
Sensoren Haube (Ein)
Sensoren Sitz (Ein)
Ampel(grün)

### 5. Haube öffnen,Einstieg

Sensoren Eingangstore (Ein)
Sensoren Einstiegsbereich (Aus)
Sensoren Arbeitsbereich (Ein)
Sensoren Haube (Aus)
Sensoren Sitze (Aus)
Ampel(grün)

### 6. Gurte anlegen

Sensoren Eingangstore (Ein)
Sensoren Einstiegsbereich (Ein)
Sensoren Arbeitsbereich (Ein)
Sensoren Haube (Aus)
Sensoren Sitze (Ein)
Ampel(grün)

### 7. Haube schließen

Sensoren Eingangstore (Ein)
Sensoren Einstiegsbereich (Ein)
Sensoren Arbeitsbereich (Ein)
Sensoren Haube (Ein)
Sensoren Sitze (Ein)
Ampel(Rot)

### 8. Arbeitsposition, Justierung

Sensoren Eingangstore (Ein)
Sensoren Einstiegsbereich (Ein)
Sensoren Arbeitsbereich, Abgrenzungszaun, (Ein)
Sensoren Haube (Ein)
Sensoren Sitze (Ein)
Ampel(Rot)

### 9. Start Simulation

Sensoren Eingangstore (Ein)
Sensoren Einstiegsbereich (Ein)
Sensoren Arbeitsbereich, Abgrenzungszaun, (Ein)
Sensoren Haube (Ein)
Sensoren Sitze (Ein)
Ampel(Rot)

### 10. Ende Simulation

Sensoren Eingangstore (Ein)
Sensoren Einstiegsbereich (Ein)
Sensoren Arbeitsbereich, Abgrenzungszaun, (Ein)
Sensoren Haube (Ein)
Sensoren Sitze (Ein)
Ampel(Rot)

### 11. Rückbewegung in Parkposition

Sensoren Eingangstore (Ein)
Sensoren Einstiegsbereich (Ein)
Sensoren Arbeitsbereich, Abgrenzungszaun, (Ein)
Sensoren Haube (Ein)
Sensoren Sitze (Ein)
Ampel(Rot)

### 12. Parkposition

Sensoren Eingangstore (Ein)
Sensoren Einstiegsbereich (Ein)
Sensoren Arbeitsbereich, Abgrenzungszaun, (Ein)
Sensoren Haube (Ein)
Sensoren Sitze (Ein)
Ampel(Rot)

### 13. Haube entriegeln, öffnen

Sensoren Eingangstore (Ein)
Sensoren Einstiegsbereich (Ein)
Sensoren Arbeitsbereich, Abgrenzungszaun, (Ein)
Sensoren Haube (Aus)
Sensoren Sitze (Aus)
Ampel(Rot)

### 14. Gurte öffnen, Aussteigen

Sensoren Eingangstore (Ein)
Sensoren Einstiegsbereich (Ein)
Sensoren Arbeitsbereich, Abgrenzungszaun, (Ein)
Sensoren Haube (Aus)
Sensoren Sitze (Aus)
Ampel(Rot)

### 15. Haube schließen

Sensoren Eingangstore (Aus)
Sensoren Einstiegsbereich (Aus)
Sensoren Arbeitsbereich, Abgrenzungszaun, (Ein)
Sensoren Haube (Ein)
Sensoren Sitze (Aus)
Ampel(grün)

### 16. Ausgang über Einstiegsbereich, Tor öffnen, Tür schließen,

Sensoren Eingangstore (Aus)
Sensoren Einstiegsbereich (Aus)
Sensoren Arbeitsbereich, Abgrenzungszaun, (Ein)
Sensoren Haube (Ein)
Sensoren Sitze (Ein)
Ampel(grün)

### 17. Einstiegsbereich verlassen Tor schließen

Sensoren Eingangstore (Ein)
Sensoren Einstiegsbereich (Ein)
Sensoren Arbeitsbereich, Abgrenzungszaun, (Ein)
Sensoren Haube (Ein)
Sensoren Sitze (Ein)
Ampel(Rot)

### 18. Standby

Sensoren Eingangstore (Ein)
Sensoren Einstiegsbereich (Ein)
Sensoren Arbeitsbereich, Abgrenzungszaun, (Ein)
Sensoren Haube (Ein)
Sensoren Sitze (Ein)
Ampel(Rot)

### 19. Ausschalten, Akku laden Notfallsysteme

Sensoren Eingangstore (Ein)
Sensoren Einstiegsbereich (Ein)
Sensoren Arbeitsbereich, Abgrenzungszaun, (Ein)
Sensoren Haube (Ein)
Sensoren Sitze (Ein)
Ampel(Rot)

Ein wesentlicher Bestandteil eines Fahrzeugsimulators ist die Projektionsfläche die dem Benutzer die Realität vorspiegelt nach der er seine bewegungstechnischen Reaktionen abstimmen muss. Herkömmliche Projektionsverfahren benutzen oft gekrümmte Projektionsflächen die nicht nur aufwendige Steuerungen für die jeweiligen Teilflächen und teuere Projektoren erfordern, sondern auch auf einen schweren und teueren Halteapparat einer solchen gekrümmten Gesamt - Fläche angewiesen sind. Eine solche großflächige Halte - Konstruktion stellt per se schon eine Gefährdung dar, da hier oft an der notwendigen Stabilität gespart wird.
Das erfindungsgemäße autonome Sicherheitssystem verwendet deshalb eine Projektionsfläche die aus ebenen, jedoch biegesteifen, leichtgewichtigen Projektionsflächen besteht. Im einfachsten Fall können dies zwei in einem geeigneten Winkel aufeinander stoßende senkrecht stehende Projektionsflächen sein, die zur Abbildung des Himmels mit einer weiteren Fläche, quasi als " Deckel " abgedeckt sind. Die hierbei auftretenden Stoßkanten der aneinander grenzenden Flächenteile sind genau definiert und deshalb programmiertechnisch relativ leicht zu beherrschen. Die, diese Stoßkanten repräsentierenden, Beleuchtungspunkte sind zudem sehr klein und die entsprechenden Übergangszonen treten deshalb in einem Gesamtbild nicht in Erscheinung. Der relativ leichte Halteapparat für eine derart gestaltete Projektionsfläche stellt ein zusätzliches Sicherheitsmoment dar.

Die Steuerung der komplexen Bewegungsvorgänge und die Signalverarbeitung der verwendeten Sensoren erfordern ein spezielles Steuerungsprogramm.

### Bezugszahlenliste

- 1: Roboterarm
- 2: Kanzeloberteil
- 3: Kanzel
- 4: Aufsetzbelag für die Kanzel
- 5: Einstiegvorrichtung
- 6: Einstiegtreppe
- 7: Sensorbelag
- 8: Arbeitsbereich des Fahrzeugsimulators
- 9: Sicherheitsabgrenzung
- 10: Einganstür
- 11: Überwachungssensor
- 12: Sockel des Roboters 1
- 13: Rettungseinheit
- 14: Laufschiene der Rettungseinheit
- 15: Lafette der Rettungseinheit
- 16: Boden mit Airbag - Ausstattung
- 17: Drehkranz der Rettungseinheit
- 18: Drehkranz des Roboterarms
- 19: Drehgelenk 1 des Roboterarms
- 20: Drehgelenk 2 des Roboterarms
- 21: Drehgelenk 3 des Roboterarms
- 22: Drehgelenk 4 des Roboterarms
- 23: Drehgelenk 5 des Roboterarms
- 24: Reling der Rettungsplattform
- 25: Rettungsplattform
- 26: Rettungsrutsche
- 27: Hubeinheit der Rettungsplattform
- 28: Sicherungsbereich
- 29: Roboter 1
- 30: Roboter 2
- 31: Roboter 3
- 32: Plattform
- 33: Projektionsfläche A
- 34: Projektionsfläche B

## Patentansprüche

1. Vorrichtung zur gefahrlosen Benutzung eines Fahrzeugsimulators in der Form einer, mittels eines 6-Achs-Roboters betätigten, um einen Sockel mit einem Drehkranz drehbaren Simulations-Kanzel (3), insbesondere eines Flugsimulators, mit
a) einem, nur für Zugangsberechtigte geöffneten, mehrfach mittels Sensoren abgesicherten, Zugangsbereich zur Simulations-Kanzel (3), wobei die Simulations-Kanzel (3) in der Ruheposition auf einem, entsprechend der Kontur ihrer Unterseite geformten, Dämpfungsbelag (4) ruht und in ihren Einstiegsbereich zu beiden Seiten jeweils eine Einstiegstreppe (6) führt, deren Trittflächen mit einem Sensorbelag (7) ausgestattet sind, der einer Steuerung der Gesamtanlage den Zugang einer Person meldet,
b) einer, auf einer Laufschiene (14) an jeden Ort des Operationsbereichs des Fahrzeugsimulators um einen, an einem Sockel (12) des 6-Achs-Roboters gelagerten, Drehkranz (17) mittels einer Lafette (15) verfahrbaren Rettungseinheit (13), wobei diese eine Rettungsplattform (25) mit einer Hubeinheit (28), eine Reling (24) und eine Rettungsrutsche (26) aufweist,
c) einer im gesamten Operationsbereich installierten stoßabsorbierenden Oberfläche, wobei sich diese über den gesamten Operationsbereich der Simulations-Kanzel (3) erstreckt, und aus kreisförmigen Sicherungsbereichen (28) besteht, wobei sich aus jedem dieser Sicherungsbereiche (28) ein Prallsack aufblähen kann und jeweils als Auslöser einem jeden dieser Sicherungsbereiche (28) ein auf fallende Massen reagierender Sensor zugeordnet ist,
d) einer aus mehreren Ebenen zusammengesetzten Projektionsfläche (33, 34) mit biegesteifen ebenen Projektionsflächen.

2. Vorrichtung nach Anspruch 1, **dadurch gekennzeichnet,**
**dass** die Simulations-Kanzel (3) auf einer Plattform (32) befestigt ist, die wiederum, anstelle lediglich eines 6-Achs-Roboters von mindestens zwei 6-Achs-Robotern betätigt wird.

3. Vorrichtung nach Anspruch 1 oder 2, **dadurch gekennzeichnet,**
**dass** der Zugangsbereich von mindestens einer, von mindestens einem Überwachungssensor (11) gesicherten, Zugangstür gebildet wird, und dass jede Zugangstür zu einer Einstiegstreppe (6) führt, die mittels eines Sensorbelags hinsichtlich des Gewichts des Betretenden überwacht wird.

4. Vorrichtung nach einem der vorhergehenden Ansprüche, **dadurch gekennzeichnet,**
**dass** bei vorher festgelegten Schadensmeldungen oder Fremdkörpermeldungen Alarm ausgelöst wird.

5. Verfahren zur gefahrlosen Benutzung eines Fahrzeugsimulators in der Form einer, mittels eines 6-Achs-Roboters betätigten, um einen Sockel mit einem Drehkranz drehbaren, Simulations-Kanzel (3), insbesondere eines Flugsimulators, mit den Schritten:
a) sobald eine Person eine Einstiegstreppe (6) betritt, einer Meldung des Zugangs zum Simulator an eine Steuerung der Gesamtanlage melden,
b) einer Bereitstellung einer an jeden Ort des Fahrzeugsimulators verfahrbaren Rettungseinheit (13), wobei diese eine Rettungsplattform (25) mit einer Hubeinheit (28), eine Reling (24) und eine Rettungsrutsche (26) aufweist,
c) einer Bereitstellung einer im gesamten Operationsbereich installierten stoßabsorbierenden Oberfläche, wobei sich diese über den gesamten Operationsbereich der Kanzel (3) erstreckt, und aus kreisförmigen Sicherungsbereichen (28) besteht, wobei sich aus jedem dieser Sicherungsbereiche (28) ein Prallsack aufblähen kann und jeweils als Auslöser einem jeden dieser Sicherungsbereiche (28) ein auf fallende Massen reagierender Sensor zugeordnet ist, und
d) einer Bereitstellung einer aus mehreren Ebenen zusammengesetzten Projektionsfläche (33, 34) mit biegesteifen ebenen Projektionsflächen.

6. Verfahren nach Anspruch 5, **dadurch gekennzeichnet,**
**dass** die Simulations-Kanzel (3) anstelle lediglich eines 6-Achs-Roboters von mindestens zwei 6-Achs-Robotern betätigt wird.

7. Verfahren nach einem der Ansprüche 5 oder 6, **dadurch gekennzeichnet,**
**dass** bei vorher festgelegten Schadensmeldungen oder Fremdkörpermeldungen Alarm ausgelöst wird.

## Claims

1. Apparatus for the safe use of a vehicle simulator in the form of a simulation cockpit (3) actuated by means of a 6-axis robot and rotatable about a pedestal with a slewing ring, in particular of a flight simulator, having
a) an access zone, which is open only to those authorized and has a number of safeguards by means of sensors, to the simulation cockpit (3), wherein the simulation cockpit (3), in the idle position, is supported on a damping layer (4) which is shaped so as to match the contour of the underside of the cockpit, and in each case one boarding stair (6) leads into the boarding zone of the cockpit on both sides, the treads of which boarding stairs are provided with a sensor layer (7) which indicates to a controller of the overall system the access of a person,
b) a rescue unit (13), which can be moved on a running rail (14) to each location of the operating zone of the vehicle simulator about a slewing ring (17), mounted on a pedestal (12) of the 6-axis robot, by means of a carriage (15), wherein this rescue unit has a rescue platform (25) with a lifting unit (28), a railing (24) and a rescue slide (26),
c) a shock-absorbing surface installed throughout the entire operating zone, wherein said surface extends over the entire operating zone of the simulation cockpit (3), and is composed of circular safety zones (28), wherein an airbag can inflate from each of said safety zones (28), and, in each case as a trigger, each of said safety zones (28) is assigned a sensor which reacts to falling masses,
d) a projection surface (33, 34) made up of a plurality of planes and with rigid planar projection surfaces.

2. Apparatus according to Claim 1, **characterized in that**
the simulation cockpit (3) is secured on a platform (32) which is, in turn, actuated not by just one 6-axis robot but by at least two 6-axis robots.

3. Apparatus according to Claim 1 or 2, **characterized in that**
the access zone is formed by at least one access door safeguarded by at least one monitoring sensor (11), and **in that** each access door leads to a boarding stair (6), which is monitored by means of a sensor layer in respect of the weight of the person entering.

4. Apparatus according to one of the preceding claims, **characterized in that**
an alarm is triggered in the event of predetermined fault indications or foreign-body indications.

5. Method for the safe use of a vehicle simulator in the form of a simulation cockpit (3) actuated by means of a 6-axis robot and rotatable about a pedestal with a slewing ring, in particular of a flight simulator, having the steps:
a) as soon as someone steps on to a boarding stair (6), signalling access to the simulator to a controller of the overall system,
b) provision of a rescue unit (13) which can be moved to any location of the vehicle simulator, wherein this rescue unit has a rescue platform (25) with a lifting unit (28), a railing (24) and a rescue slide (26),
c) provision of a shock-absorbing surface installed throughout the entire operating zone, wherein said surface extends over the entire operating zone of the cockpit (3) and is composed of circular safety zones (28), wherein an airbag can inflate from each of said safety zones (28), and, in each case as a trigger, each of said safety zones (28) is assigned a sensor which reacts to falling masses, and
d) provision of a projection surface (33, 34) made up of a plurality of planes and with rigid planar projection surfaces.

6. Method according to Claim 5, **characterized in that** the simulation cockpit (3) is actuated not by just one 6-axis robot but by at least two 6-axis robots.

7. Method according to either of Claims 5 or 6, **characterized in that**
an alarm is triggered in the event of predetermined fault indications or foreign-body indications.

## Revendications

1. Dispositif d'utilisation sans risque d'un simulateur de conduite se présentant sous la forme d'un poste de pilotage de simulation (3) actionné à l'aide d'un robot à 6 axes et pouvant être mis en rotation autour d'un socle au moyen d'une couronne rotative, notamment d'un simulateur de vol, comprenant
a) une zone d'accès au poste de pilotage de simulation (3) ouverte uniquement aux personnes habilitées et protégée plusieurs fois au moyen de capteurs, le poste de pilotage de simulation (3), dans sa position de repos, reposant sur un revêtement d'amortissement (4), façonné d'une manière qui correspond au contour de sa face inférieure et un marchepied (6) conduisant respectivement, des deux côtés, dans sa zone d'accès, marchepied dont les surfaces de marche sont équipées d'un revêtement détecteur (7) qui signale à une unité de commande de l'ensemble de l'installation l'entrée d'une personne,
b) une unité d'évacuation (13) déplaçable sur un rail de roulement (14) à chaque emplacement de la zone opérationnelle du simulateur de conduite au moyen d'un chariot (15) autour d'une couronne rotative (17) montée sur un socle (12) du robot à 6 axes, celle-ci comportant une plateforme d'évacuation (25) munie d'une unité de levage (28), d'un garde-corps (24) et d'un toboggan d'évacuation (26),
c) une surface absorbant les chocs installée dans l'ensemble de la zone opérationnelle, ladite surface s'étendant sur la totalité de la zone opérationnelle du poste de pilotage de simulation (3) et est constituée de zones de sécurité (28) circulaires, un coussin gonflable pouvant se gonfler à partir de chacune desdites zones de sécurité (28) et un capteur réagissant à des masses tombantes est respectivement associé, en tant qu'élément déclencheur, à chacune desdites zones de sécurité (28),
d) une surface de projection (33, 34) composée de plusieurs plans, comportant des surfaces de projection planes résistant à la flexion.

2. Dispositif selon la revendication 1, **caractérisé en ce que** le poste de pilotage de simulation (3) est fixé à une plateforme (32) qui est elle-même actionnée par au moins deux robots à 6 axes et non pas uniquement par un robot à 6 axes.

3. Dispositif selon la revendication 1 ou 2, **caractérisé en ce que** la zone d'accès est formée par au moins une porte d'accès sécurisée par au moins un capteur de surveillance (11) et **en ce que** chaque porte d'accès conduit à un marchepied (6) qui est surveillé en ce qui concerne le poids de la personne entrante au moyen d'un revêtement détecteur.

4. Dispositif selon l'une quelconque des revendications précédentes, **caractérisé en ce qu'**une alarme est déclenchée lorsque des messages signalant des dégradations ou lorsque des messages signalant la présence de corps étrangers ont préalablement été émis.

5. Procédé d'utilisation sans risque d'un simulateur de conduite se présentant sous la forme d'un poste de pilotage de simulation (3) actionné à l'aide d'un robot à 6 axes et pouvant être mis en rotation autour d'un socle au moyen d'une couronne rotative, notamment d'un simulateur de vol, comportant les étapes consistant à :
a) dès qu'une personne marche sur un marchepied (6), envoyer un message indiquant un accès au simulateur à une unité de commande de l'ensemble de l'installation,
b) fournir une unité d'évacuation (13) déplaçable à chaque emplacement du simulateur de conduite, ladite unité d'évacuation présentant une plateforme d'évacuation (25) munie d'une unité de levage (28), d'un garde-corps (24) et d'un toboggan d'évacuation (26),
c) fournir une surface absorbant les chocs installée dans l'ensemble de la zone opérationnelle, ladite surface s'étendant sur la totalité de la zone opérationnelle du poste de pilotage (3) et est constituée de zones de sécurité (28) circulaires, un coussin gonflable pouvant se gonfler à partir de chacune desdites zones de sécurité (28) et un capteur réagissant à des masses tombantes est respectivement associé, en tant qu'élément déclencheur, à chacune desdites zones de sécurité (28), et
d) fournir une surface de projection (33, 34) composée de plusieurs plans, comportant des surfaces de projection planes résistant à la flexion.

6. Procédé selon la revendication 5, **caractérisé en ce que** le poste de pilotage de simulation (3) est actionné par au moins deux robots à 6 axes et non pas uniquement par un robot à 6 axes.

7. Procédé selon l'une quelconque des revendications 5 ou 6, **caractérisé en ce qu'**une alarme est déclenchée lorsque des messages signalant des dégradations la présence de corps étrangers ont préalablement été émis.
